# EUROPEAN PATENT SPECIFICATION

(11) **EP 4 328 087 B1**
(45) Date of publication and mention of the grant of the patent: **20.08.2025**
(21) Application number: 23204622.7
(22) Date of filing: 19.10.2023
(51) Int. Cl.: B60P 1/48, B60P 1/64

(54) **LOAD HANDLING SYSTEM**
LASTHANDHABUNGSSYSTEM
SYSTÈME DE MANUTENTION DE CHARGE

(43) Date of publication of application: 28.02.2024
(73) Proprietor: Hiab AB, 215 32 Malmö (SE)
(72) Inventor: VÄHÄ-PIIKKIÖ, Ville, FI-21290 Rusko (FI); MATTILA, Tommi, FI-21530 Paimio (FI); SIRÉN, Pasi, FI-21610 Kirjala (FI)
(74) Representative: Bjerkén Hynell KB

(56) References cited:
- EP-A2- 0 925 999
- EP-B1- 3 141 421
- FR-A1- 2 940 937

## Description

### Technical field

The present disclosure relates to a to a load handling system, and also to a vehicle comprising such a system. Specifically, the load handling system is adapted for loading and unloading different types of load carrying objects, e.g. ISO 668 containers, and flat-rack containers, to and from the vehicle from the rear end of the vehicle.

### Background

In the past, and even nowadays, most of the hooklift container handling units have been equipped with an assembly of support device or devices, at the rear end of the hooklift, having e.g. a set of rollers or skids that has allowed ISO 668 containers and other load carrying objects to be safely pulled up on the vehicle during loading or pushed down the ground from the vehicle during unloading. During the use, the device(s) is heavily loaded and this has forced the structure of the device to be quite big in comparison to the space that is available at the rear end of the vehicle chassis, the hooklift system and container. This has led to situations where certain types, or combinations of, of containers or flat-rack containers have been difficult or impossible to handle for an assembly of support devices(s). Also, from an operator point of view, the big, manually operated components are heavy and slow to use and cause a safety risk in particular as the assemblies often needs manual operation to prepare for unloading or loading of a load carrying object. Furthermore, in case of military use, the trucks may be operated in a hostile environment where leaving an armored truck cabin may involve a big risk.

ISO 668 containers are containers according to an international standard which classifies intermodal freight shipping containers nominally, and standardizes their sizes, measurements and weight specifications.

Flat-rack containers or simply flatracks may have the same dimensions as their standard container counterpart. However, since these load carrying objects are open structures, which may only have walls on the short ends, their dimensions are based on an imaginary volume placed between the internal dimensions of the container.

In a commonly used structure, the rear end device comprises a rigid middle beam or mounting consoles that are mounted on the chassis, the chassis side, or directly on the hooklift arrangement. The beam or console may then include a pivotable joint that is perpendicular with the longitudinal centerline of a truck and/or hooklift, that allows container beds to rotate. This known structure is disclosed in EP1288067B1 that relates to a vehicle provided with a load handling system of a hook-lift type that is capable of loading a freight container or a flat-rack onto the vehicle. A pair of support devices at the rear of the vehicle have a first configuration in which they extend outwards such that rollers can support the outer lower side regions of the container during loading. The support devices can be pivoted about pivots in order to adopt a second configuration in which they point inwards so that some further rollers spaced close together now face upwards for supporting the central rails on the underside of a flat-rack container during loading. In the second configuration, the structure used to support the container during loading is stowed inwardly and below the rollers and thus does not impede the loading of the flat-rack.

In DE102015113283A1 is disclosed an interchangeable frame that is intended to accommodate certain types of interchangeable containers and is intended to supplement different commercial vehicle chassis from different manufacturers and vehicle types for this purpose. A modular system with several interchangeable frame units is provided, which can be bolted to the support frame of a commercial vehicle to provide the necessary support, guidance and attachment options for the desired types of swap bodies. EP3141421A1 relates to a semi-trailer provided with a front gooseneck part. A folding bolster assembly comprises a pair of support arms pivotally mounted on the front gooseneck part for movement between a folded stored position inboard of sides of the trailer body and an in-use position projecting laterally outwardly of the trailer body for engagement with and support of a container mounted on the trailer body.

Other load handling systems are known e.g. from FR 2 940 937 A1 and EP 0 925 999 A2.

The object of the present invention is to make it possible to operate a wider range of different types of bodies (e.g. flat-rack containers and ISO 668 containers) where the loading/unloading operation preferably may be performed without the operator needing to manually (e.g. by hand) adapt the setup of the load handling device mounted at the vehicle.

### Summary

The above-mentioned objects are achieved by the present invention according to the independent claims.

Preferred embodiments are set forth in the dependent claims.

According to the invention, a load handling system is provided, arranged to be mounted to a vehicle and further arranged for supporting loading and unloading of load carrying objects, such as containers and flat rack containers, onto and from, the vehicle from the rear of the vehicle.

The load handling system comprises a frame arrangement comprising a mounting assembly arranged to be fastened to a vehicle frame at a rear end of the vehicle, and a first support member and a second support member. The first and second support members are arranged for supporting the underside of a first type of load carrying objects during loading and unloading.

In addition, the load handling system comprises a first folding structure and a second folding structure respectively connecting the mounting assembly with the first support member and the second support member, and that the first and second folding structures are configured to be moved between an unfolded position, and a folded position. The first and second support members are configured to be folded towards a longitudinal symmetry axis A1 of the vehicle, wherein in the unfolded position, the first and second support members are in their active position, and arranged to support the underside of the first type of a load carrying object during a loading/unloading procedure, and wherein in the folded position, the first and second support members are in their passive position, being a stowed position. In the stowed position, use of third support members is enabled. The third support members are arranged at the mounting assembly for supporting the underside of a second type of load carrying objects during loading and unloading of the second type of load carrying object.

Preferably, the first type of load carrying object is an ISO 668 container, and the second type of load carrying object is a flat-rack container.

By applying the load handling system according to the present invention, the operation of a wider range of load carrying objects including containers, and flat-rack containers, are possible to handle and the operation may preferably be performed without the operator needing to manually set the rear end device to a certain setup. For example, the operator may change the load handling system's configuration from flat-rack mode to container mode automatically from the truck cabin.

### Brief description of the drawings

Figure 1 is a side-view of a vehicle provided with a hooklift arrangement and a load handling system according to the present invention.
Figure 2A-2C are schematic illustrations of a loading procedure by the vehicle shown in figure 1 loading a first type of load carrying object.
Figure 3A-3C are schematic illustrations of a loading procedure by the vehicle shown in figure 1 loading a second type of load carrying object.
Figure 4 is a view from above schematically illustrating the load handling system according to the present invention in an unfolded position.
Figure 5 is a view from above schematically illustrating the load handling system according to the present invention in a folded position.
Figure 6 is a view from above schematically illustrating the load handling system according to embodiments of the present invention in an unfolded position, and in a folded position (dashed lines).
Figure 7 is a block diagram schematically illustrating embodiments of the present invention.
Figure 8 is a view from above schematically illustrating embodiments of the load handling system according to the present invention in an unfolded position.
Figure 9 is a side view schematically illustrating embodiments of the load handling system according to the present invention.
Figure 10 is a view from above schematically illustrating embodiments of the load handling system according to the present invention in a folded position.
Figure 11 is a side view schematically illustrating embodiments of the load handling system according to the present invention.

### Detailed description

The load handling system, and the vehicle, will now be described in detail with references to the appended figures. Throughout the figures the same, or similar, items have the same reference signs. Moreover, the items and the figures are not necessarily to scale, emphasis instead being placed upon illustrating the principles of the invention.

With references to the figures, a load handling system 2 is disclosed, arranged to be mounted to a vehicle 4 and further arranged for supporting loading and unloading of load carrying objects 6, such as containers and flat-rack containers, onto and from, the vehicle 4 from the rear of the vehicle.

Containers are e.g. ISO 668 containers, i.e. containers according to an international standard which classifies intermodal freight shipping containers nominally, and standardizes their sizes, measurements and weight specifications.

A flat-rack container is usually for the transportation or storage of cargo with unique dimensions. Flat racks are open structures and may only have sides on the short side of the container, so the cargo can stick out the side of the container during transportation.

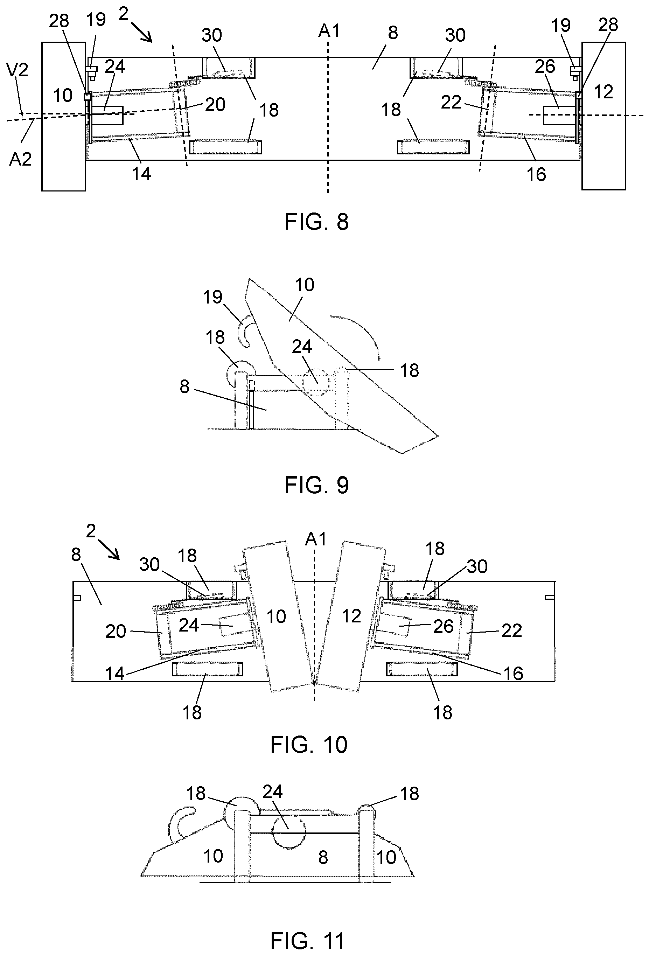

The load handling system 2 comprises a frame arrangement comprising a mounting assembly 8 arranged to be fastened to a vehicle frame at a rear end of the vehicle 2. The mounting assembly 8 may have an elongated shape and is structured to be fastened to the vehicle such that the longitudinal axis of the mounted assembly is perpendicular to a longitudinal symmetry axis A1 of the vehicle, see e.g. figure 8. In alternative variations the mounting assembly may comprise more than one part as an alternative to a single structure with an elongated shape. In case of two parts of the mounting assembly they may be mounting to the rear end of a vehicle in a symmetrical placement on either side of the longitudinal axis A1 of the vehicle.

The load handling system 2 further comprises a first support member 10 and a second support member 12, wherein the first and second support members are arranged for supporting the underside of a first type of load carrying objects during loading and unloading, and a first folding structure 14 and a second folding structure 16 respectively connecting the mounting assembly 8 with the first support member 10 and the second support member 10.

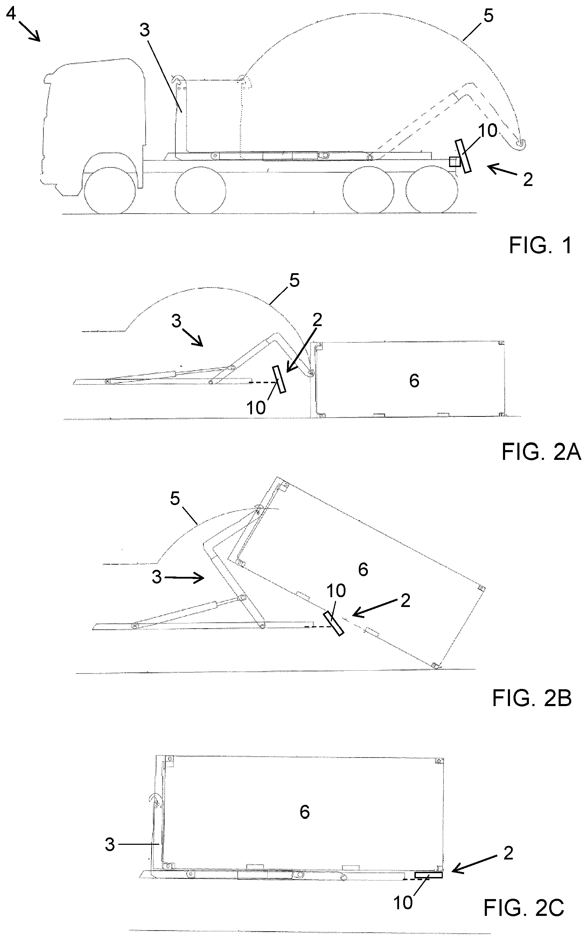

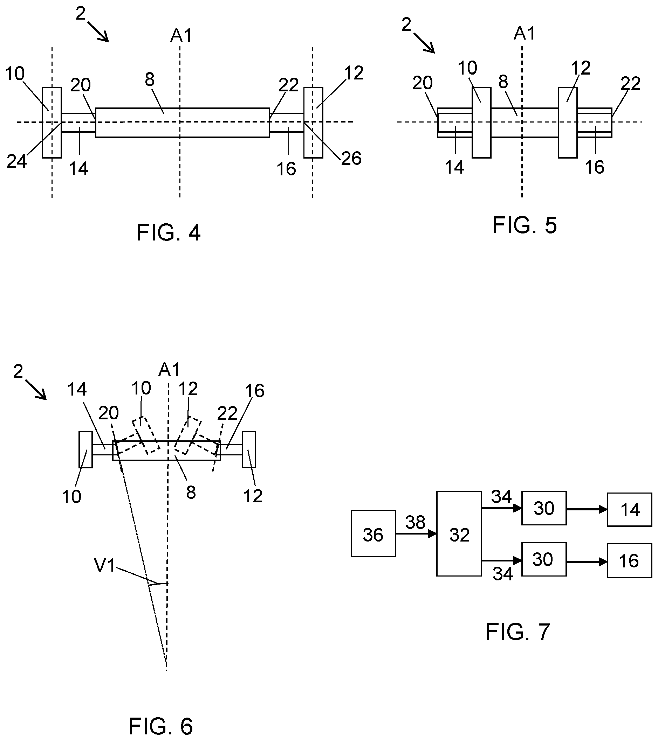

The first and second folding structures 14, 16 are configured to be moved between an unfolded position, and a folded position, and that the first and second support members 10, 12 are configured to be folded towards the longitudinal symmetry axis A1 of the vehicle 4. Figures 4, and 8 show the load handling system 2 having the first and second support members in unfolded positions. In addition, figures 2A-2C show a loading procedure of a vehicle provided with a load handling system having the support members in unfolded positions.

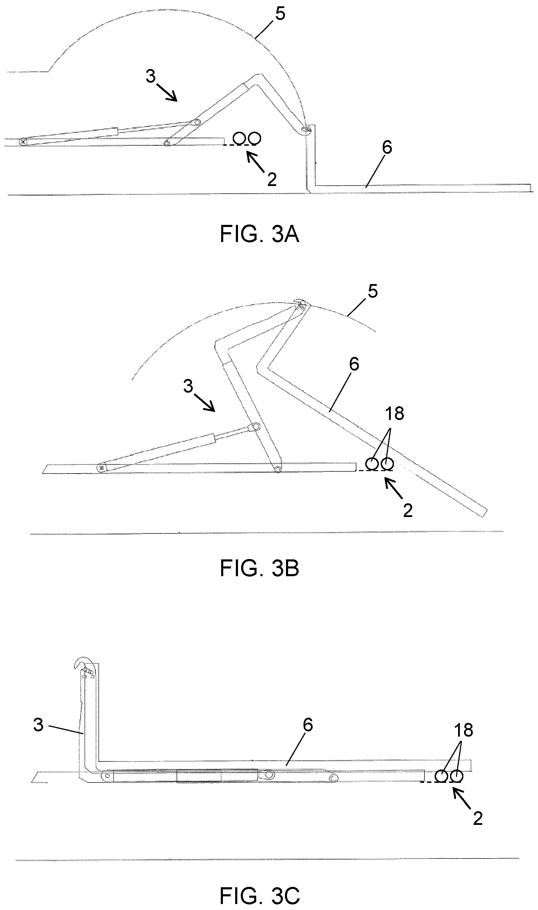

Figures 5, and 10 show the load handling system 2 having the first and second support members in folded positions. In addition, figures 3A-3C show a loading procedure of a vehicle provided with a load handling system having the support members in folded positions.

In the unfolded position, the first and second support members 10, 12 are in their active position, and are arranged to support the underside of the first type of a load carrying object 6 during a loading/unloading procedure, and naturally also to support the first type of load carrying object when it has been loaded to the vehicle.

In the folded position, the first and second support members 10, 12 are in their passive position, being a stowed position, thereby enabling use of third support members 18 arranged at the mounting assembly 8 for supporting the underside of a second type of load carrying objects 6 during loading and unloading of the second type of load carrying object 6. And also, for supporting the second type of the load carrying object when it has been loaded to the vehicle.

In one advantageous embodiment, the first type of load carrying object 6 is an ISO 668 container, and the second type of load carrying object is a flat-rack container.

Figure 1 discloses a vehicle 4 provided with a load handling system 2 mounted at the rear end of the vehicle. A hooklift arrangement 3 is mounted at the vehicle, provided with means for loading and unloading a load carrying object 6 to and from the vehicle. In figure 1, various positions of the hooklift arrangement 3 are shown and the trajectory 5 of the hook during a loading/unloading procedure is also illustrated.

Figures 2A-2C show schematic illustrations of the hooklift arrangement performing a loading procedure of a first type of load carrying object, i.e. an ISO 668 container. Figures 3A-3C show schematic illustrations of a hooklift arrangement performing a loading procedure of a second type of load carrying object, i.e. a flat-rack container.

In one embodiment, the folding/unfolding movement is achieved by moving the first and second folding structures 14, 16 about a first and a second folding axle 20, 22, respectively, wherein these axles are parallel (see figures 4 and 5), or at an angle V1 (see figure 6, 8, and 10), to the longitudinal symmetry axis A1 of the vehicle 4, and are arranged in a common plane. Furthermore, the first and the second folding axle 20, 22 are at equal distances from, and at opposite sides of, the longitudinal symmetry axis A1 of the vehicle 4. Preferably, the folding/unfolding movement range between the unfolded and folded positions is approximately 180 degrees.

In the unfolded position, the longitudinal directions of the elongated support members are essentially parallel.

In a further embodiment, the first and second support members 10, 12 are respectively connected to the first and second folding structures 14, 16 via a first and a second pivot axle 24, 26 and being rotatable in relation to the first and second folding structures 14, 16 about pivot pivot axles. Figure 9 specifically illustrates the rotation of the first support member being rotatable about the first pivot axle 24.

Figure 9 and 11 further illustrates an embodiment where the mounting assembly 8 comprises third support members 18 in the form of a set of rollers. Figure 9 shows a particular embodiment of the rollers, where the support members comprises two sets of rollers (although only one side is shown in the figure, a corresponding set of rollers is placed symmetrically to the other side of the longitudinal axis of the vehicle). In figure 9 and 11 an embodiment with two rollers are shown of the left side of the vehicle and the front roller of the two rollers having a bigger diameter than the rear roller. With a bigger diameter and/or a higher placement relative to the placement of the rear roller, it is possible to increase the loading capacity of the hooklift arm as the front roller will be the point of contact towards the container during the critical range of the unloading and loading.

Figure 9 further illustrates and embodiment of the invention where a safety assembly comprising two connecting members 19 to secure the unfolded positions of the folding structures 14, 16 when the container is fully loaded to the vehicle. The connecting members 19 are mounted to the mounting assembly 8 and first and second support members respectively, 10, 12, so that the connecting structures are connected to each other on either side when the first and second support members 10, 12 are in their respective horizontal positions and disconnected through the tilting of the support members 10, 12 as the container is unloaded. The connecting members may e.g. be implemented as a hook structure mounted to the support member to connect to an opening or catching loop, arranged at the mounting assembly 8 to catch the hook in the secured position. According to another embodiment, when the folding structures 14, 16 are in the unfolded positions, the directions of first and second pivot axles 24, 26 are aligned, and are perpendicular to the longitudinal symmetry axis A1 of the vehicle 4. This is illustrated in figures 4, 6, and 8.

In still another embodiment, blocking members 28 are provided structured to limit the rotation of the first and second support members 10, 12 about their pivot axles 24, 26 to approximately 90 degrees, between a position where the supporting surfaces of the first and second support members 10, 12 are essentially vertical and a position where the supporting surfaces are essentially horizontal when the support members are in their unfolded position. The blocking members are shown in figure 8, and are preferably mounted at the sides of the support members 10, 12 facing the respective folding structures 14, 16. Figure 9 illustrates the support member 10 rotated approximately 45 degrees from the horizontal level. The rotation is achieved because the support members are mounted to the folding structures such that the pivot axles 24, 26 are slightly asymmetrically positioned meaning that the centers of gravity of the support members is not aligned with the pivot axles 24, 26 (see figures 9 and 11) resulting in that the parts of the support members being directed in the rear direction of the vehicle are heavier than the parts directed in the forward direction of the vehicle. When the support members are moved from the folded position to the unfolded position they will, due to gravity, slowly move from horizontal positions to essentially vertical positions and then being in positions for supporting the container during a loading procedure. The positions of the support members during a loading procedure of a container are schematically illustrated by figures 2A-2C.

According to another embodiment, each of the folding axles 20, 22 are at an angle V1, where 0<V1<45 degrees, in relation to the longitudinal symmetry axis A1 of the vehicle 4, and that each of the pivot axles 24, 26 are at an angle V2, where 0<V2<45 degrees, in relation to a longitudinal symmetry axis A2 of the folding structure 14, 16.

In figure 6, angle V1 is indicated being approximately 30 degrees, and angle V2 (not shown) are 0 degrees. Angle V2 is indicated in figure 8.

The angles V1 and V2 are chosen such that the extensions of the first and second support members 10, 12 in the rear direction of the vehicle 4 are less when the folding structures 14, 16 are in their folded positions than when they are in their unfolded position. Compare the rear extensions of the support members e.g. in figures 8 and 10 (downwards in the figures) where the support members in the folded position (see figure 10) are stowed such that essentially no parts extend outside the mounting assembly 8 in the rear direction of the vehicle. This is advantageous as essentially no parts of the stowed support members may interfere with a loading operation of e.g. a flat-rack container.

In still another embodiment, the horizontal level of first and second support members 10, 12 when they are in the active position, i.e. the unfolded position, is at higher level than the horizontal level of the third support members 18. The parts of the folding structures 14, 16 and of the first and second support members 10, 12 facing upwards when they are in the folded position are at a lower level than the horizontal level of the third support members 18. This aspect is clearly illustrated in figures 9 (unfolded position) and 11 (folded position).

In another embodiment, the folding and unfolding movements of each of the first and second folding structures 14, 16 are arranged to be actuated by a respective actuator 30 controlling the folding/unfolding movements, and that the loading handling system 2 further comprises a control unit 32 configured to control the movements via control signals 34. The control unit 32 is shown in the block diagram of figure 7.

Preferably, the actuator 30 is a linear actuator controlling the folding/unfolding movements with linear extensions, and that the control unit 32 is configured to control the linear extensions of the linear actuator via the control signals 34. The control unit 32 is configured to receive input instructions 38, from an operator via an input interface unit 36, e.g. mounted in the cabin of the vehicle, or automatically from an external unit 36 of an autonomous system.

The folding and unfolding operation may be performed manually, but advantageously the rotating movement is done via the actuator that turns the folding structure from container position to flat-rack position and vice versa. An actuator 30 is provided for moving each of the folding structures, and may preferably comprises a hydraulic cylinder connected to a gear wheel that is in connection with another gear wheel that is mounted to the folding structure. The gear wheels are shown in figures 8, and 10. With the stroke of the cylinder and the ratio between the gear wheels it is possible to adjust the folding angle and speed. As an alternative, the movements may be achieved by electric motors that directly or indirectly provide the rotational movements to the folding axles.

The present invention also relates to a vehicle 4 comprising a load handling system 2 as described above. The vehicle is illustrated in figure 1.

The present invention is not limited to the above-described preferred embodiments. Various alternatives, and modifications may be used. Therefore, the above embodiments should not be taken as limiting the scope of the invention, which is defined by the appending claims.

## Claims

1. A load handling system (2) arranged to be mounted to a vehicle (4) and further arranged for supporting loading and unloading of load carrying objects (6), such as containers and flat rack containers, onto and from, the vehicle (4) from rear of the vehicle; the load handling system (2) comprises:
- a frame arrangement comprising a mounting assembly (8) arranged to be fastened to a vehicle (4) frame at a rear end of the vehicle;
- a first support member (10) and a second support member (12), wherein the first and second support members are arranged for supporting the underside of a first type of load carrying objects during loading and unloading, and
wherein the load handling system further comprises a first folding structure (14) and a second folding structure (16) respectively connecting the mounting assembly (8) with the first support member (10) and the second support member (12), and that said first and second folding structures (14, 16) are configured to be moved between an unfolded position, and a folded position, wherein in the unfolded position, the first and second support members (10, 12) are in their active position, and arranged to support the underside of the first type of a load carrying object (6) during a loading/unloading procedure, and wherein in the folded position, the first and second support members (10, 12) are in their passive position, being a stowed position, thereby enabling use of third support members (18) arranged at the mounting assembly (8) for supporting the underside of a second type of load carrying objects (6) during loading and unloading of the second type of load carrying object (6),
**characterized in that** the first and second support members (10, 12) are configured to be folded towards a longitudinal symmetry axis A1 of the vehicle (4).

2. The load handling system (2) according to claim 1, wherein the folding/unfolding movement is achieved by moving the first and second folding structures (14, 16) about a first and a second folding axle (20, 22), respectively, wherein these axles are parallel, or at an angle V1, to the longitudinal symmetry axis A1 of the vehicle (4), and are arranged in a common plane, and at equal distances from, and at opposite sides of, the longitudinal symmetry axis A1 of the vehicle (4).

3. The load handling system (2) according to claim 2, wherein the folding/unfolding movement range between the unfolded and folded positions is approximately 180 degrees.

4. The load handling system (2) according to any of claims 1-3, wherein said first and second support members (10, 12) are respectively connected to the first and second folding structures (14, 16) via a first and a second pivot axle (24, 26) and being rotatable in relation to the first and second folding structures (14, 16) about said pivot axles.

5. The load handling system (2) according to claim 4, wherein when the folding structures (14, 16) are in the unfolded positions, the directions of first and second pivot axles (24, 26) are aligned, and are perpendicular to the longitudinal symmetry axis A1 of the vehicle (4).

6. The load handling system (2) according to claims 4 or 5, wherein blocking members (28) are provided structured to limit the rotation of said first and second support members (10, 12) about their pivot axles (24, 26) to approximately 90 degrees, between a position where the supporting surfaces of the first and second support members (10, 12) are essentially vertical and a position where the supporting surfaces are essentially horizontal.

7. The load handling system (2) according to any of claims 2-3, and any of claims 4-6, wherein each of said folding axles (20, 22) are at an angle V1, where 0<V1<45, in relation to the longitudinal symmetry axis A1 of the vehicle (4), and that each of said pivot axles (24, 26) are at an angle V2, where 0<V2<45, in relation to a longitudinal symmetry axis A2 of said folding structure (14, 16), and wherein said angles V1 and V2 are chosen such that the extensions of said first and second support members (10, 12) in the rear direction of the vehicle (4) are less when said folding structures (14, 16) are in their folded positions than when in their unfolded positions.

8. The load handling system (2) according to any of claims 1-7, wherein the horizontal level of first and second support members (10, 12) when in the active position, i.e. the unfolded position, is at higher level than the horizontal level of said third support members (18), and the parts of the folding structures (14, 16) and of the first and second support members (10, 12) facing upwards when they are in the folded position are at a lower level than the horizontal level of the third support members (18).

9. The load handling system (2) according to any of claims 1-8, wherein the folding and unfolding movements of each of the first and second folding structures (14, 16) are arranged to be actuated by a respective actuator (30) controlling the folding/unfolding movements, and wherein the loading handling system (2) further comprises a control unit (32) configured to control said movements via control signals (34).

10. The load handling system (2) according to claim 9, wherein said actuator (30) is a linear actuator controlling the folding/unfolding movements with linear extensions, and wherein said control unit (32) is configured to control said linear extensions of the linear actuator via said control signals (34).

11. A vehicle (4) comprising a load handling system (2) according to any of claims 1-10.

12. The vehicle (4) according to claim 11, wherein said first type of load carrying object (6) is an ISO 668 container, and said second type of load carrying object is a flat-rack container.

## Patentansprüche

1. Lasthandhabungssystem (2), das dazu ausgelegt ist, an einem Fahrzeug (4) montiert zu werden, und das ferner zum Unterstützen des Beladens und Entladens von lasttragenden Objekten (6), wie etwa Containern und Flat-Rack-Containern, auf das und von dem Fahrzeug (4) von der Rückseite des Fahrzeugs ausgelegt ist; wobei das Lasthandhabungssystem (2) Folgendes umfasst:
- eine Rahmenanordnung, die eine Montagebaugruppe (8) umfasst, die dazu ausgelegt ist, an einem Rahmen des Fahrzeugs (4) an einem Heck des Fahrzeugs befestigt zu werden;
- ein erstes Stützelement (10) und ein zweites Stützelement (12), wobei das erste und das zweite Stützelement zum Stützen der Unterseite einer ersten Art von lasttragenden Objekten während des Beladens und Entladens ausgelegt sind und wobei das Lasthandhabungssystem ferner eine erste Faltstruktur (14) und eine zweite Faltstruktur (16) umfasst, die jeweils die Montagebaugruppe (8) mit dem ersten Stützelement (10) und dem zweiten Stützelement (12) verbinden, und wobei die erste und die zweite Faltstruktur (14, 16) dazu konfiguriert sind, zwischen einer entfalteten Position und einer gefalteten Position bewegt zu werden, wobei in der entfalteten Position das erste und das zweite Stützelement (10, 12) in ihrer aktiven Position sind, und dazu ausgelegt sind, die Unterseite der ersten Art eines lasttragenden Objekts (6) während eines Belade-/Entladevorgangs zu stützen, und wobei in der gefalteten Position das erste und das zweite Stützelement (10, 12) in ihrer passiven Position sind, bei der es sich um eine verstaute Position handelt, wodurch die Verwendung von dritten Stützelementen (18) ermöglicht wird, die an der Montagebaugruppe (8) angeordnet sind, um die Unterseite einer zweiten Art von lasttragenden Objekten (6) während des Beladens und Entladens der zweiten Art von lasttragendem Objekt (6) zu stützen,
**dadurch gekennzeichnet, dass** das erste und das zweite Stützelement (10, 12) dazu konfiguriert sind, in Richtung einer Längssymmetrieachse A1 des Fahrzeugs (4) gefaltet zu werden.

2. Lasthandhabungssystem (2) nach Anspruch 1, wobei die Faltungs/Entfaltungsbewegung durch Bewegen der ersten und der zweiten Faltstruktur (14, 16) um eine erste bzw. eine zweite Faltachse (20, 22) erreicht wird, wobei diese Achsen parallel oder in einem Winkel V1 zu der Längssymmetrieachse A1 des Fahrzeugs (4) sind und in einer gemeinsamen Ebene und in gleichen Abständen von und an gegenüberliegenden Seiten der Längssymmetrieachse A1 des Fahrzeugs (4) angeordnet sind.

3. Lasthandhabungssystem (2) nach Anspruch 2, wobei der Faltungs/Entfaltungsbewegungsbereich zwischen der entfalteten und der gefalteten Position ungefähr 180 Grad beträgt.

4. Lasthandhabungssystem (2) nach einem der Ansprüche 1-3, wobei das erste und das zweite Stützelement (10, 12) jeweils mit der ersten und der zweiten Faltstruktur (14, 16) über eine erste und eine zweite Schwenkachse (24, 26) verbunden und in Bezug auf die erste und die zweite Faltstruktur (14, 16) um die Schwenkachsen drehbar sind.

5. Lasthandhabungssystem (2) nach Anspruch 4, wobei, wenn sich die Faltstrukturen (14, 16) in der entfalteten Position befinden, die Richtungen der ersten und der zweiten Schwenkachse (24, 26) ausgerichtet und senkrecht zu der Längssymmetrieachse A1 des Fahrzeugs (4) sind.

6. Lasthandhabungssystem (2) nach Anspruch 4 oder 5, wobei Blockierelemente (28) strukturiert bereitgestellt sind, um die Drehung des ersten und des zweiten Stützelements (10, 12) um ihre Schwenkachsen (24, 26) um ungefähr 90 Grad zwischen einer Position, in der die Stützflächen des ersten und des zweiten Stützelements (10, 12) im Wesentlichen vertikal sind, und einer Position, in der die Stützflächen im Wesentlichen horizontal sind, zu begrenzen.

7. Lasthandhabungssystem (2) nach einem der Ansprüche 2-3 und einem der Ansprüche 4-6, wobei jede der Faltachsen (20, 22) in einem Winkel V1, wobei 0<V1<45, in Bezug auf die Längssymmetrieachse A1 des Fahrzeugs (4) vorliegen und wobei jede der Schwenkachsen (24, 26) in einem Winkel V2, wobei 0<V2<45, in Bezug auf eine Längssymmetrieachse A2 der Faltstruktur (14, 16) vorliegen und wobei die Winkel V1 und V2 derart ausgewählt werden, dass die Verlängerungen des ersten und des zweiten Stützelements (10, 12) in der Rückwärtsrichtung des Fahrzeugs (4) kleiner sind, wenn sich die Faltstrukturen (14, 16) in ihren gefalteten Positionen befinden, als wenn sie sich in ihren entfalteten Positionen befinden.

8. Lasthandhabungssystem (2) nach einem der Ansprüche 1-7, wobei die horizontale Ebene des ersten und des zweiten Stützelements (10, 12) in der aktiven Position, d. h. in der entfalteten Position, auf einer höheren Ebene liegt als die horizontale Ebene des dritten Stützelements (18) und die Teile der Faltstrukturen (14, 16) und des ersten und des zweiten Stützelements (10, 12), die nach oben gerichtet sind, wenn sie sich in der gefalteten Position befinden, auf einer niedrigeren Ebene als die horizontale Ebene der dritten Stützelemente (18) liegen.

9. Lasthandhabungssystem (2) nach einem der Ansprüche 1-8, wobei die Faltungs- und Entfaltungsbewegungen jeder von der ersten und der zweiten Faltstruktur (14, 16) dazu ausgelegt sind, von einem jeweiligen Aktor (30) betätigt zu werden, der die Faltungs-/Entfaltungsbewegungen steuert, und wobei das Lasthandhabungssystem (2) ferner eine Steuereinheit (32) umfasst, die dazu konfiguriert ist, die Bewegungen über Steuersignale (34) zu steuern.

10. Lasthandhabungssystem (2) nach Anspruch 9, wobei der Aktor (30) ein linearer Aktor ist, der die Faltungs-/Entfaltungsbewegungen mit linearen Verlängerungen steuert, und wobei die Steuereinheit (32) dazu konfiguriert ist, die linearen Verlängerungen des linearen Aktors über die Steuersignale (34) zu steuern.

11. Fahrzeug (4), umfassend ein Lasthandhabungssystem (2) nach einem der Ansprüche 1-10.

12. Fahrzeug (4) nach Anspruch 11, wobei die erste Art von lasttragendem Objekt (6) ein ISO-668-Container ist und die zweite Art von lasttragendem Objekt ein Flat-Rack-Container ist.

## Revendications

1. Système de manutention de charge (2) conçu pour être monté sur un véhicule (4) et également conçu pour supporter le chargement et le déchargement d'objets de transport de charge (6), tels que des conteneurs et des conteneurs à rayonnage plat, sur le véhicule (4) et à partir de celui-ci depuis l'arrière du véhicule. Le système de manutention de charge (2) comprend :
- un agencement de châssis comprenant un ensemble de montage (8) agencé pour être fixé à un châssis de véhicule (4) à une extrémité arrière du véhicule ;
- un premier élément de support (10) et un deuxième élément de support (12), dans lequel les premier et deuxième éléments de support sont agencés pour supporter la face inférieure d'un premier type d'objets de transport de charge pendant le chargement et le déchargement, et dans lequel le système de manutention de charge comprend en outre une première structure pliante (14) et une deuxième structure pliante (16) reliant respectivement l'ensemble de montage (8) au premier élément de support (10) et au deuxième élément de support (12), et que lesdites première et deuxième structures pliantes (14, 16) sont configurés pour être déplacés entre une position dépliée, et une position pliée, dans lequel dans la position dépliée, les premier et deuxième éléments de support (10, 12) sont dans leur position active, et agencé pour supporter la face inférieure du premier type d'objet porteur de charge (6) pendant une procédure de chargement/déchargement, et dans lequel dans la position pliée, les premier et deuxième éléments de support (10, 12) sont dans leur position passive, étant une position rangée. Cela permet l'utilisation de troisièmes éléments de support (18) agencés au niveau de l'ensemble de montage (8) pour supporter la face inférieure d'un deuxième type d'objets de support de charge (6) pendant le chargement et le déchargement du deuxième type d'objets de support de charge (6), **caractérisé en ce que** les premier et deuxième éléments de support (10, 12) sont repliables vers un axe de symétrie longitudinal A1 du véhicule (4).

2. Système de manutention de charge (2) selon la revendication 1, dans lequel le mouvement de pliage/dépliage est obtenu en déplaçant les première et deuxième structures de pliage (14, 16) autour d'un premier et d'un deuxième essieu de pliage (20, 22), respectivement, dans lequel ces essieux sont parallèles, ou à un angle V1, à l'axe de symétrie longitudinale A1 du véhicule (4), et sont agencés dans un plan commun, et à des distances égales, et à des côtés opposés, de l'axe de symétrie longitudinale du véhicule (4).

3. Système de manutention de charge (2) selon la revendication 2, dans lequel la plage de mouvement de pliage/dépliage entre les positions dépliée et pliée est approximativement de 180 degrés.

4. Système de manutention de charge (2) selon l'une quelconque des revendications 1 à 3, dans lequel lesdits premier et deuxième éléments de support (10, 12) sont respectivement reliés aux première et deuxième structures pliantes (14, 16) par l'intermédiaire d'un premier et d'un deuxième axe de pivotement (24, 26) et peuvent tourner par rapport aux première et deuxième structures pliantes (14, 16) autour desdits axes de pivotement.

5. Système de manutention de charge (2) selon la revendication 4, dans lequel, lorsque les structures pliantes (14, 16) sont dans les positions dépliées, les directions des premier et deuxième axes de pivotement (24, 26) sont alignées, et sont perpendiculaires à l'axe de symétrie longitudinal A1 du véhicule (4).

6. Système de manutention de charge (2) selon les revendications 4 ou 5, dans lequel des éléments de blocage (28) sont prévus structurés pour limiter la rotation desdits premier et deuxième éléments de support (10, 12) autour de leurs axes de pivotement (24, 26) à approximativement 90 degrés, entre une position où les surfaces de support des premier et deuxième éléments de support (10, 12) sont essentiellement verticales et une position où les surfaces de support sont essentiellement horizontales.

7. Système de manutention de charge (2) selon l'une quelconque des revendications 2 à 3, et l'une quelconque des revendications 4 à 6, dans lequel chacun desdits axes de pliage (20, 22) forment un angle V1, où 0<V1<45, par rapport à l'axe de symétrie longitudinal A1 du véhicule (4), et que chacun desdits axes de pivotement (24, 26) forment un angle V2, où 0<V2<45, par rapport à un axe de symétrie longitudinal A2 de ladite structure pliante (14, 16), et dans lequel lesdits angles V1 et V2 sont choisis de telle sorte que les extensions desdits premier et deuxième éléments de support (10, 12) dans la direction arrière du véhicule (4) sont moindres lorsque lesdites structures pliantes (14, 16) sont dans leurs positions repliées que dans leurs positions dépliées.

8. Système de manutention de charge (2) selon l'une quelconque des revendications 1 à 7, dans lequel le niveau horizontal des premier et deuxième éléments de support (10, 12) lorsqu'elle est en position active, c.-à-d. la position dépliée, est à un niveau supérieur au niveau horizontal desdits troisièmes éléments de support (18), et les parties des structures pliantes (14, 16) et des premier et deuxième éléments de support (10, 12) tournés vers le haut lorsqu'ils sont en position repliée sont à un niveau inférieur au niveau horizontal des troisièmes éléments de support (18).

9. Système de manutention de charge (2) selon l'une quelconque des revendications 1 à 8, dans lequel les mouvements de pliage et de dépliage de chacune des première et deuxième structures de pliage (14, 16) sont agencés pour être actionnés par un actionneur respectif (30) commandant les mouvements de pliage/dépliage, et dans lequel le système de manutention de charge (2) comprend en outre une unité de commande (32) configurée pour commander lesdits mouvements via des signaux de commande (34).

10. Système de manutention de charge (2) selon la revendication 9, dans lequel ledit actionneur est un actionneur linéaire commandant les mouvements de pliage/dépliage avec des extensions linéaires, et dans lequel ladite unité de commande (32) est configurée pour commander lesdites extensions linéaires de l'actionneur linéaire via lesdits signaux de commande (34).

11. Véhicule (4) comprenant un système de manutention de charge (2) selon l'une quelconque des revendications 1 à 10.

12. Véhicule (4) selon la revendication 11, dans lequel ledit premier type d'objet porteur de charge (6) est un conteneur ISO 668, et ledit deuxième type d'objet porteur de charge est un conteneur à châssis plat.
